# EUROPEAN PATENT SPECIFICATION

(11) **EP 3 266 698 B1**
(45) Date of publication and mention of the grant of the patent: **06.11.2019**
(21) Application number: 15884064.5
(22) Date of filing: 18.05.2015
(51) Int. Cl.: B63H 5/16, B63H 1/18, B63H 1/28

(54) **ASYMMETRIC WAKE GENERATING VORTEX GENERATOR FOR REDUCING PROPELLER NOISE AND VIBRATION**
ASYMMETRISCHE SCHLEPPE ERZEUGENDER WIRBELERZEUGER ZUR REDUZIERUNG VON PROPELLERGERÄUSCHEN UND -SCHWINGUNGEN
GÉNÉRATEUR DE VORTEX À GÉNÉRATION DE SILLAGE ASYMÉTRIQUE POUR RÉDUIRE LE BRUIT ET LA VIBRATION DE L'HÉLICE

(30) Priority: 04.03.2015 KR 20150030460
(43) Date of publication of application: 10.01.2018
(73) Proprietor: Korea Institute of Ocean Science and Technology, Busan 49111 (KR)
(72) Inventor: SEOL, Han Shin, Daejeon 305-343 (KR); KIM, Ki Sup, Daejeon 305-770 (KR); AHN, Jong Woo, Daejeon 302-791 (KR)
(74) Representative: EP&C
(86) International application number: PCT/KR2015/004963
(87) International publication number: WO 2016/140398

(56) References cited:
- WO-A1-2008/026903
- JP-A- S 548 388
- JP-A- 2002 362 485
- KR-A- 20080 092 850
- KR-A- 20080 092 850
- KR-A- 20090 072 242
- KR-A- 20120 019 280
- KR-A- 20130 004 757
- KR-B1- 920 009 838
- US-B1- 7 802 533

## Description

### Technical Field

The present invention relates to a device and method of reducing noise and vibration of a propeller for a vessel. More particularly, it relates to a vortex generator that generates an asymmetric wake for reducing noise and vibration of a propeller, the vortex generator being capable of reducing propeller noise and vibration by reducing cavitation that is generated on the blades of the propeller by controlling a flow moving to the propeller.

### Background Art

In general, vessels are moved forward by a propeller that is connected to a rotary shaft of an engine in the hull and generates propulsion by being rotated by power from the engine, and the shape and size of blades of propellers are designed in various ways, depending on sailing conditions.

Further, a propeller generates propulsion and torque using the flow passing the blades, in which the torque is offset by the power from an engine and a vessel is moved forward by the propulsion.

Further, vessels are recently increased in size and speed to reduce the operating cost by loading more passengers and freights and quickly carrying them, but the increase in size and speed of vessels increases the capacity of engines and load on propellers, which increases fluctuating pressure and vibration by the propellers.

In order to solve this problem, various technologies for improving propulsive efficiency of a vessel and reducing fluctuating pressure and vibration by a propeller have been developed. In order to improve propulsive efficiency of a vessel and reduce vibration by a propeller in the related art, for example, there are "The stern appendage to improve ship's speed and wake field on the stern of ships" in Korean Patent No. 10-1293006, a "Flow improving device of wing type with wake reduction & advanced force generation" in Korean Patent No. 10-1066213, and a "Asymmetric pre-swirl stator" in Korean Patent No. 10-0416720.

In detail, the stern appendage to improve a ship's speed and wake field on the stern of ships disclosed in Korean Patent No. 10-1293006 includes support shafts having a predetermined length, laterally spaced on the front top of a propeller and the surface of a stern, and disposed symmetrically downward and a flow control blade having a predetermined length, fixed to the front ends of the support shafts, and laterally disposed in parallel with the top of the propeller in order to reduce resistance by improving water flow at the stern and minimize cavitation by the propeller, thereby improving propulsion.

Further, the wing type flow improving device with wake reduction & advanced force generation disclosed in Korean Patent No. 10-1066213 is disposed in an area with relatively uniform flow ahead of a propeller at a stern, uses some of lift by blades as propulsion, and improves a flow moving to the propeller by moving a separation point through acceleration of the flow on a hull and by reducing the volume of a low-speed flow field around the stern, thereby improving propeller efficiency by increasing the speed of the flow moving to the propeller and saving fuel of a vessel by generating additional propulsion.

Further, the asymmetric pre-swirl stator disclosed in Korean Patent No. 10-0416720 relates to a device for improving a flow for improving propeller efficiency by generating pre-swirl effect by changing the tangential speed of a flow moving to a propeller using the concept of asymmetric pre-swirl stator.

As described above, various technologies have been proposed to efficiently improve propulsive efficiency of a vessel through a simple configuration without a complicated device, but the above technologies in the related art have the following problems.

That is, the technologies for reducing fluctuating pressure and vibration by a propeller in the related art, generally, are designed to reduce cavitation noise that is the main factor of causing propeller noise in a vessel by decreasing cavitation that is generated on the blades of a propeller by controlling a flow moving to the propeller using a blade-shaped appendage or a flow control fin attached to the hull. However, these devices have a defect that they should be large to achieve an effect because they control a flow speed and a flow direction by the force of fluid by making a predetermined angle of attack between a flow and a blade-shaped structure to control the flow moving to the propellers.

Further, there is proposed a method of improving efficiency of a propeller using the blade-shaped appendage or the flow control fin not to reduce noise and vibration of the propeller, but to generate pre-swirl effect by making a tangential change in the flow moving to the propeller. However, the devices improves propeller efficiency, but the angle of attack of a blade surface increases and excessive cavitation is generated on the surface of the propeller, which has an adverse influence on the noise and vibration of the propeller.WO2008/026903 discloses a flow control mechanism for improving pressure resistance and hull vibration of a ship. The mechanism comprises three fins. All three fins may have a rectangular, trapezoidal, or triangular shape.

KR20080092850 discloses a system comprising a bilge fin and an aft fin on both sides of the hull of a ship. The system aims to improve the wake distribution on a propeller and thereby the propeller efficiency. The bilge fins are disposed symmetrically on either side, and are located further away from the propeller than the aft fins. The aft fins each have an end portion at a side of the propeller that are oppositely inclined with respect to one another, and that generate a flow with a direction opposite the rotation direction of the propeller. The system directs a bilge vortex, that separates from the vessel's hull during travel at a point where the cross sectional area of the hull reduces significantly, towards the propeller. This should improve the propulsive efficiency by increasing the flow speed of fluid towards the propeller.

The performance of the systems disclosed in WO2008/026903 and KR20080092850 both leave to be improved. The fin shapes mentioned in WO2008/026903 do not provide optimal conditions of the fluid flowing to the propeller regarding vortex strength and flow speed. In KR20080092850, the opposite direction of flow of fluid towards the propeller would cause an increase in cavitation at the propeller. Furthermore, the system of KR20080092850 does not generate a wake distribution that causes an increase in flow speed in specifically those areas of the propeller where cavitation is generated most.

Accordingly, as described above, in order to solve the problems with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and flow direction by the force of fluid, and in that it can improve propeller efficiency from the pre-swirl effect by controlling the flow moving to a propeller by changing the tangential speed, but causes a side effect of an increase in noise and vibration of a propeller due to an increase of cavitation, it is preferable to provide a new type of vortex generator that makes a flow faster by reducing the angle of attack of a blade surface by changing the axial speed rather than the tangential speed by generating vortex to be able to control a flow speed even with a small structure and that can minimize cavitation noise by generating an asymmetric wake for specifically increasing the speed of the flow in the first quadrant with particularly a lot of cavitation of a propeller when the propeller rotates clockwise when seeing the bow from the stern. However, a device or a method that satisfies all of the demands has not been developed yet. In the present invention, it is assumed that the first quadrant is the right upper area of four areas equally divided at 90 degrees around the axis of a propeller in a plan when the propeller is seen from the stern of a vessel, and the other areas are sequentially counterclockwise second, third, and fourth quadrants, in which it is assumed that the propeller rotates clockwise.

That is, when the propeller rotates counterclockwise, the area with a lot of cavitation is the second quadrant and a vortex generator is attached with the left and right changed in contrast to the propeller rotating clockwise.

### Documents of Related Art

(Patent Document 1) Korean Patent No. 10-1293006 (2013.07.29)
(Patent Document 2) Korean Patent No. 10-1066213 (2011.09.14)
(Patent Document 3) Korean Patent No. 10-0416720 (2004.01.15)
(Patent Document 4) WO2008/026903 (2008.03.06)
(Patent Document 5) KR20080092850 (2008.10.16)

### Disclosure

### Technical Problem

The present invention has been made in an effort to solve the problems in the related art and an object of the present invention is to provide a vortex generator that generates an asymmetric wake for reducing propeller noise and vibration, the vortex generator being cable of minimizing cavitation noise by generating asymmetric wake distribution for increasing the speed of a flow in a quadrant of a propeller where cavitation is generated most when the propeller rotates clockwise when seeing the bow from the stern by reducing an angle of attack of a blade surface by changing an axial speed using an asymmetric wake, in order to solve the problems with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and flow direction by the force of fluid, and in that it can improve propeller efficiency from the pre-swirl effect by controlling the flow moving to a propeller by changing the tangential speed, but causes a side effect of an increase in noise and vibration of a propeller due to an increase of cavitation.

Further, another object of the present invention is to provide a vortex generator that generates an asymmetric wake for reducing noise and vibration of a propeller to decrease noise and vibration due to cavitation, the vortex generator being asymmetrically attached to the left and right sides of a hull, inducing a change in axial speed, reducing an angle of attack of a blade surface in the first quadrant of a propeller by generating asymmetric wake distribution for increasing the speed of a flow in the first quadrant with a lot of cavitation, and improving a flow rectification performance by equalizing the angle of attack between a flow and the blade of the propeller and making a wake moving to the propeller uniform.

### Technical Solution

In order to achieve the object of the present invention, according to an aspect of the present invention as claimed, there is provided a vortex generator that generates an asymmetric wake for reducing propeller noise and vibration in order to solve the problems with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and direction by the force of fluid, and in that it can improve propeller efficiency from the pre-swirl effect by controlling the flow moving to a propeller by changing the tangential speed, but causes a side effect of an increase in propeller noise and vibration due to an increase of cavitation, The vortex generator includes a first vortex generating plate formed in a metal plate shape and attached to a right side of a vessel (a left side when a propeller rotates counterclockwise) ahead of the propeller, when the propeller rotates clockwise, in which an angle of attack of a flow moving to blades of the propeller is reduced by generating an asymmetric wake further increasing a speed of a flow moving to blade surfaces of the propeller at a right upper portion of the propeller that corresponds to a portion where the cavitation is generated most (at a left right portion when the propeller rotates counterclockwise), thereby reducing the cavitation at the right upper portion of the propeller (at the left upper portion when the propeller rotates counterclockwise) where the cavitation is generated most to reduce noise and vibration of the propeller.

The vortex generator may further include a second vortex generating plate formed in a metal plate shape the same as the first vortex generating plate and attached to the left side of the vessel ahead of the propeller (the right side when the propeller rotates counterclockwise), opposite to the first vortex generating plate, in which the first vortex generating plate and the second vortex generating plate may be attached at the same position at different angles on the left and right sides of the vessel, whereby an angle of attack of a flow moving to blades of the propeller may be reduced by generating an asymmetric wake further increasing a speed of a flow moving to blade surfaces of the propeller at a right upper portion of the propeller that corresponds to a portion where cavitation is generated most (at a left right portion when the propeller rotates counterclockwise), thereby reducing the cavitation at the right upper portion of the propeller where the cavitation is generated most to reduce propeller noise and vibration.

The vortex generator further includes a third vortex generating plate attached to the right side of the vessel (the left side when the propeller rotates counterclockwise) at the same height as the first vortex generating plate, closer to the propeller than the first vortex generator, in which the angle of attack of the flow moving toward the blades of the propeller may be further reduced by further increasing the flow speed of the flow moving to the blade surfaces of the propeller at the upper right portion of the propeller (left upper portion when the propeller rotates counterclockwise), thereby further reducing the cavitation.

Assuming that a distance AP∼FP between a bow FP to a stern AP of the vessel is an entire length LBP of the vessel, the first vortex generating plate and the second vortex generating plate may be attached at positions corresponding to 12 ∼ 18% of the entire length LBP from the stern AP.

The third vortex generating plate may be attached at a position corresponding to 8 ∼ 15% of the entire length LBP from the stern AP.

The first vortex generating plate to the third vortex generating plate may be disposed within a range from a bottom of the vessel to an axis of the propeller.

The first vortex generating plate to the third vortex generating plate may be formed in a pentagonal shape.

The first vortex generating plate to the third vortex generating plate may be positioned at an angle such that an angle of attack between the vortex generating plates and a flow moving to the vortex generating plate is 5 ∼ 15 degrees.

The difference of attachment angle between the first and third vortex generating plates disposed on the right side of the vessel when the propeller rotates clockwise (the left side when the propeller rotates counterclockwise) and the second vortex generating plate disposed on the left side of the vessel (the left side when the propeller rotates counterclockwise) may be 0 ∼ 10 degrees.

The difference of attachment angle between the first and third vortex generating plates disposed on the right side of the vessel when the propeller rotates clockwise (the left side when the propeller rotates counterclockwise) and the second vortex generating plate disposed on the left side of the vessel (the left side when the propeller rotates counterclockwise) may be 1 ∼ 10 degrees.

The difference of attachment angle between the first and third vortex generating plates disposed on the right side of the vessel when the propeller rotates clockwise (the left side when the propeller rotates counterclockwise) and the second vortex generating plate disposed on the left side of the vessel (the left side when the propeller rotates counterclockwise) may be 1 ∼ 5 degrees.

According the present invention, there is provided a method of reducing propeller noise and vibration by reducing cavitation using the vortex generator that generates an asymmetric wake for reducing propeller noise and vibration.

According to another aspect of the present invention, there is provided a vessel that reduces noise and vibration by reducing cavitation using the vortex generator that generates an asymmetric wake for reducing noise and vibration of a propeller of any one of claims 38 to 11 and is attached to the vessel.

### Advantageous Effects

As described above, further, it is possible to solve the problems with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and flow direction by the force of fluid, and in that it can improve propeller efficiency from the pre-swirl effect by controlling the flow moving to a propeller by changing the tangential speed, but causes a side effect of an increase in propeller noise and vibration due to an increase of cavitation, by providing a vortex generator that generates an asymmetric wake for propeller reducing noise and vibration of to minimize cavitation noise by generating asymmetric wake distribution for increasing the speed of a flow in the first quadrant of a propeller (the second quadrant when the propeller rotates counterclockwise) where a lot of cavitation is generated when the propeller rotates clockwise when seeing the bow from the stern by reducing an angle of attack of a blade surface by changing an axial speed using an asymmetric wake.

Further, according to the present invention, there is provided a vortex generator that generates an asymmetric wake for reducing propeller noise and vibration to minimize cavitation noise by generating asymmetric wake distribution for increasing the speed of a flow in the first quadrant of a propeller (the second quadrant when the propeller rotates counterclockwise) where cavitation is generated most when the propeller rotates clockwise when seeing the bow from the stern by reducing an angle of attack of a blade surface by changing an axial speed using an asymmetric wake, so that the angles of attack between a flow and the blade surfaces of a propeller is equalized by a vortex generator asymmetrically attached to the left and right sides of a hull and flow rectification performance is improved by making a wake flowing to propeller surfaces uniform, whereby it is possible to reduce noise and vibration due to cavitation.

### Description of Drawings

FIG. 1 is a diagram schematically showing the entire configuration of vortex generators that generate an asymmetric wake for reducing propeller noise and vibration according to first and second embodiments of the present invention.
FIG. 2 is a diagram schematically showing the entire configuration of a vortex generator that generates an asymmetric wake for reducing propeller noise and vibration according to a third embodiment of the present invention.
FIG. 3 is a diagram for illustrating an angle of attack of a vortex generator to a flow.
FIG. 4 is a diagram for illustrating an angle of attack of a blade surface of a propeller to a flow.
FIG. 5 is a diagram showing a wake flowing to a propeller without a vortex generator.
FIG. 6 is a diagram comparing cases with and without the vortex generator according to the first embodiment of the present invention.
FIG. 7 is a diagram comparing cases with and without the vortex generator according to the second embodiment of the present invention.
FIG. 8 is a diagram comparing cases with and without the vortex generator according to the third embodiment of the present invention.
FIG. 9 is a diagram comparing cases when the vortex generator according to the first embodiment of the present invention is formed and attached in a rectangular shape and a pentagonal shape.
FIG. 10 is a diagram comparing flow speed distribution when the vortex generator according to the first embodiment of the present invention is formed and attached in a rectangular shape and a pentagonal shape.
FIG. 11 is a diagram comparing vortex strengths when the vortex generator according to the first embodiment of the present invention is formed and attached in a rectangular shape and a pentagonal shape.
FIG. 12 is a diagram comparing results of estimating through numerical analysis the amount of cavitation generated on a propeller when a vortex generator is attached and not attached.

### Best Mode

Detailed embodiments of a vortex generator that generates an asymmetric wake for reducing noise and vibration of a propeller according to the present invention will be described hereafter with reference to the accompanying drawings.

It should be understood that the following description is just an example for accomplishing the present invention and the present invention is not limited thereto.

Further, it should be understood that components that are determined as being the same as or similar to those in the related art or as being easily understood and achieved by those skilled in the art are not described in detail for simple description in the following description about embodiments of the present invention.

Further, in the following description about embodiments of the present invention, it should be understood that the same or similar components are given the same reference numerals and are not described in detail for simple description.

The present invention, as described below, provides a vortex generator that generates an asymmetric wake for reducing propeller noise and vibration, the vortex generator being cable of minimizing cavitation noise by generating asymmetric wake distribution for increasing the speed of a flow in a quadrant of a propeller where cavitation is generated most when the propeller rotates clockwise when seeing the bow from a stern by reducing an angle of attack of a blade by changing an axial speed using an asymmetric wake, in order to solve the problems with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and direction by the force of fluid, and in that it can improve propeller efficiency from the pre-swirl effect by controlling the flow moving to a propeller by changing the tangential speed, but causes a side effect of an increase in propeller noise and vibration due to an increase of cavitation.

Further, the present invention provides a vortex generator that generates an asymmetric wake for reducing propeller noise and vibration to decrease noise and vibration due to cavitation, the vortex generator being asymmetrically attached to the left and right sides of a hull, inducing a change in axial speed, reducing an angle of attack of a blade in the first quadrant of a propeller by generating asymmetric wake distribution for increasing the speed of a flow in the first quadrant where cavitation is generated most, and improving a flow rectification performance by equalizing the angle of attack between a flow and the blade of the propeller and making a wake moving to the propeller uniform.

The vortex generators that generate an asymmetric wake for reducing noise and vibration of a propeller according to the present invention will be described in detail with reference to the accompanying drawings.

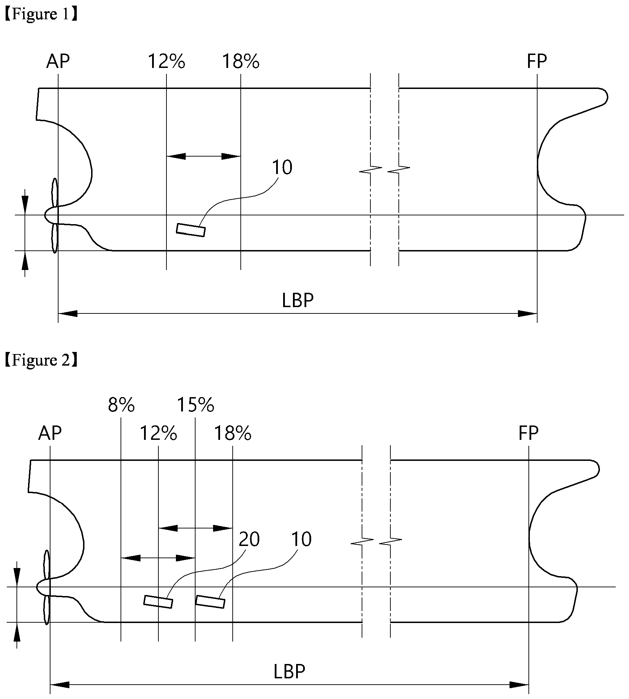

First, referring to FIG. 1, FIG. 1 is a diagram schematically showing the entire configuration of vortex generators that generate an asymmetric wake for reducing noise and vibration of a propeller according to first and second embodiments of the present invention.

As shown in FIG. 1, a vortex generator 10 that generates an asymmetric wake for reducing noise and vibration of a propeller according to the first embodiment of the present invention is formed in the shape of a metal plate and one vortex generator is attached to the right side of a vessel ahead of a propeller when the propeller rotates clockwise (on the left side when the propeller rotates counterclockwise) with respect to the propeller.

That is, the vortex generator 10 according to the first embodiment of the present invention, which is formed in the shape of a metal plate, as shown in FIG. 1, is independently attached to the left side or the right side of a vessel, depending on the rotational direction of the propeller to increase the speed of a flow in a first quadrant or a second quadrant where the angle of attack between a propeller surface and a flow is the largest.

Further, a vortex generator 10 that generates an asymmetric wake for reducing propeller noise and vibration according to the second embodiment of the present invention, as shown in FIG. 1, is formed in the shape of a metal plate and is attached to the left and right side of a vessel ahead of a propeller, asymmetrically with the propeller therebetween.

That is, the vortex generator 10 according to the second embodiment of the present invention, which is formed in the shape of a metal plate, as shown in FIG. 2, is asymmetrically attached at the same position at different angles to the left side or the right side of a vessel to increase the speed of a flow in a first quadrant or a second quadrant where the angle of attack between a propeller surface and a flow is the largest.

Further, referring to FIG. 2, shown is a diagram schematically showing the entire configuration of a vortex generator that generates an asymmetric wake for reducing propeller noise and vibration according to a third embodiment of the present invention.

A vortex generator 20 according to the third embodiment of the present invention, as shown in FIG. 2, is additionally attached to the right side of the vessel when the propeller rotates clockwise or to the left side when the propeller rotates counterclockwise, with the vortex generator 10 attached at the same position at different angles to the left and right sides of the vessels, similar to the second embodiment to further increase the speed of a flow in the first quadrant, in which the additional vortex generator is positioned closer to the propeller at the same height as the vortex generator 10.

In detail, when the distance (AP ∼ FP) between the bow FP to the stern AP is the entire length LBP of the vessel, the vortex generator 10 may be attached to at a position corresponding to 12% ∼ 18% of the entire length LBP from the stern AP on left and right sides of the vessel in the first and second embodiments.

Further, in the third embodiment, the additional vortex generator 20 may be attached at a position corresponding to 8 ∼ 15% of the entire length LBP from the stern AP on the left or right side of the vessel, depending on the rotational direction of the propeller.

Further, the vortex generators 10 and 20 may be positioned at a height within the range from the bottom of the vessel to the axis of the propeller.

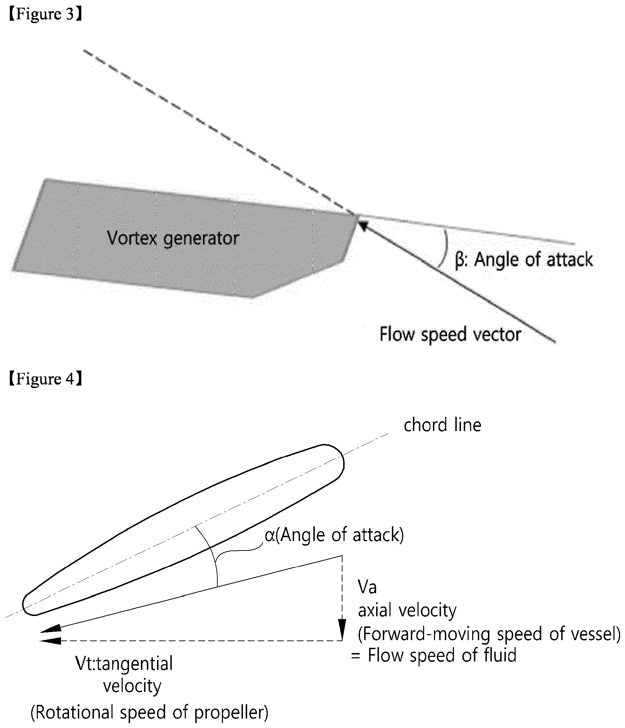

Further, referring to FIG. 3, shown is a diagram for illustrating an angle of attack of a vortex generator to a flow.

As shown in FIG. 3, the attachment angle of the vortex generators 10 and 20 are determined by an angle of attack □ between the vortex generators and a flow speed vector traveling to the vortex generators. The angle of attack □ between the vortex generators and the flow moving to the vortex generators is set to 5 ∼ 15 degrees, in which the difference of the attachment angles on the left and right sides may be set to 0 ∼ 10 degrees, and if necessary, may be set to 1 ∼ 10 degrees or 1 to 5 degrees.

The vortex generators 10 and 20 may be formed in various shapes, for example, a triangle or a rectangle, but it is the most effective that they are made of a pentagonal metal plate and then attached.

Therefore, according to the configuration, vortex generated by the vortex generators 10 and 20 pushes slow flow moving to the propeller surface outside the propeller by changing an existing flow pattern so that high-speed flow moves to the propeller surface while flowing on the surface of the hull, so the angle of attack of the flow moving to the blades is decreased, thereby suppressing cavitation by reducing load on the propeller surface.

In particular, when the propeller rotates clockwise, flow becomes faster in the first quadrant (the second quadrant when the propeller rotates counterclockwise) where cavitation is generated most, so the angle of attack between the propeller surface and a flow decreases and the cavitation is greatly reduced. Accordingly, the noise by cavitation that is the main factor of the propeller noise is considerably reduced, so noise and vibration by the propeller can be reduced.

The principle of reducing noise and vibration of a propeller using the vortex generators 10 and 20 according to an embodiment of the present invention is described in detail hereafter. First, in the present invention, it is assumed that the first quadrant is the right upper area of four areas equally divided at 90 degrees around the axis of a propeller in a propeller surface when seeing the bow from the stern, and the other areas are sequentially counterclockwise second, third, and fourth quadrants, in which it is assumed that the propeller rotates clockwise.

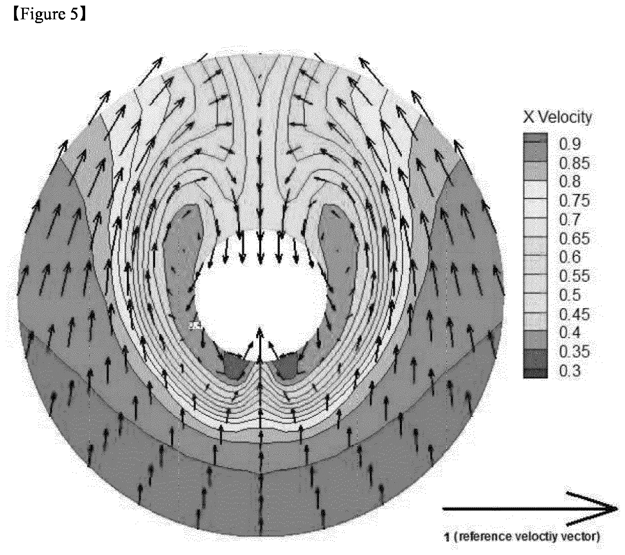

Further, referring to FIGS. 4 and 5, FIG. 4 is a diagram for illustrating an angle of attack between a propeller blade surface and a flow and FIG. 5 is a diagram showing a wake flowing to a propeller surface without a vortex generator attached.

In FIG. 4, assuming a plan with the portion of a propeller at the stern of a vessel in a fixed coordinate system, as shown in FIG. 4, the axial velocity Va of a flow moving to a propeller is expressed as the sum of the moving (forward moving) speed of the vessel and the velocity component in the axial direction of the propeller of a wake induced by the shape of the hull, while the tangential velocity Vt may be expressed as the sum of the rotational speed of the propeller and the horizontal velocity component of a wake induced by the shape of the hull. That is, as shown in FIG. 4, the angle between the vector produced by summing the axial velocity Va and the tangential velocity Vt of the propeller and a chord line of a propeller blade is an angle of attack □, so when the rotational speed of the propeller increases or the tangential speed of the wake flowing to the propeller surface increases in the opposite direction to the rotational speed of the propeller, the angle of attack □ increases, while when the moving speed, that is, the speed Va of the flow moving to the propeller increases, the angle of attack □ decreases.

In detail, when the angle of attack □ increases, the pressure difference between the top (suction surface) and the bottom (pressure surface) of a propeller blade increases, so the load applied to the propeller blade increases and cavitation on the top (suction surface) that is a low-pressure area increases accordingly. Considering the first quadrant (when the propeller rotates clockwise), as shown in FIG. 5, the tangential component of the wake is in the opposite direction to the rotational direction of the propeller (the clockwise direction) in the first quadrant, so the flow speed becomes fast and the angle of attack □ increases relative to the second quadrant where the rotational direction and the tangential component of the propeller are the same, which increases the pressure difference between the top (suction surface) and the bottom (pressure surface) of a propeller blade, as described above, so the strongest cavitation is generated in the first quadrant in comparison to other quadrants, which causes noise and vibration.

Accordingly, in consideration of the above description, it is the most effective to reduce the angle of attach in the first quadrant when the propeller rotates clockwise in terms of reduction of the entire cavitation. To this end, as in an embodiment of the present invention, when a vortex generator is disposed ahead of a propeller, the axial speed Va is increased by the vortex and the angle of attack of the flow moving to the propeller blades decreases, so the force applied to the blade surfaces of the propeller decreases and pressure drop on the bottom (suction surface) of the propeller blades is attenuated, thus cavitation is reduced and propeller noise and vibration can be reduced.

Further, as in the third embodiment, since two vortex generators are attached to the right side when a propeller rotates clockwise, the speed of the flow flowing to the propeller blades is further increased, so it is possible to further improve the above-mentioned effect of reducing cavitation and propeller noise and vibration by decreasing the angle of attack. Accordingly, the vortex generator according to the present invention can be achieved. Further, as compared with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and flow direction by the force of fluid, and in that it can improve propeller efficiency from the pre-swirl effect by controlling the flow moving to a propeller by changing the tangential speed, but causes a side effect of an increase in propeller noise and vibration due to an increase of cavitation, the vortex generator according to an embodiment of the present invention is different from existing vortex generators in that it can generally make a flow faster by reducing the angle of attack of a flow moving to a blade surface by changing the axial speed using vortex other than the tangential speed only attaching a small structure to a side of a vessel and can minimize cavitation noise by generating asymmetric wake distribution that increases the speed of a flow in the first quadrant of a propeller surface (when the propeller rotates clockwise) or in the second quadrant (when the propeller rotates counterclockwise) where cavitation is generated most.

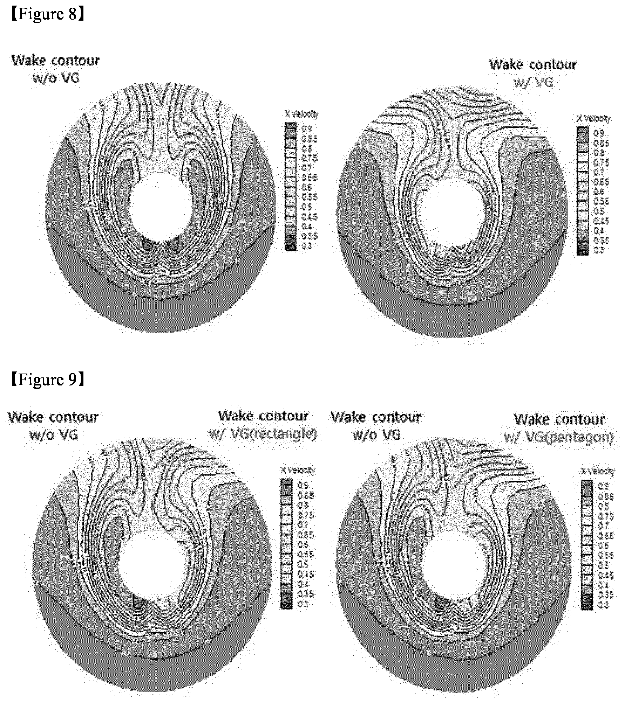

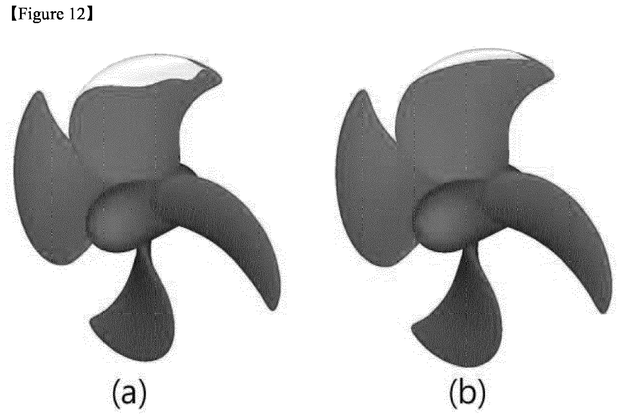

Further, referring to FIGS. 6 to 12, FIGS. 6 to 8 are diagrams comparing cases when a vortex generator according to an embodiment of the present invention is attached and not attached, FIGS. 9 to 11 are diagrams comparing cases when the vortex generator according to the first embodiment of the present invention is formed and attached in a rectangular shape and a pentagonal shape, and FIG. 12 is a diagram comparing results of estimating through numerical analysis the amount of cavitation generated on a propeller when a vortex generator is attached and not attached.

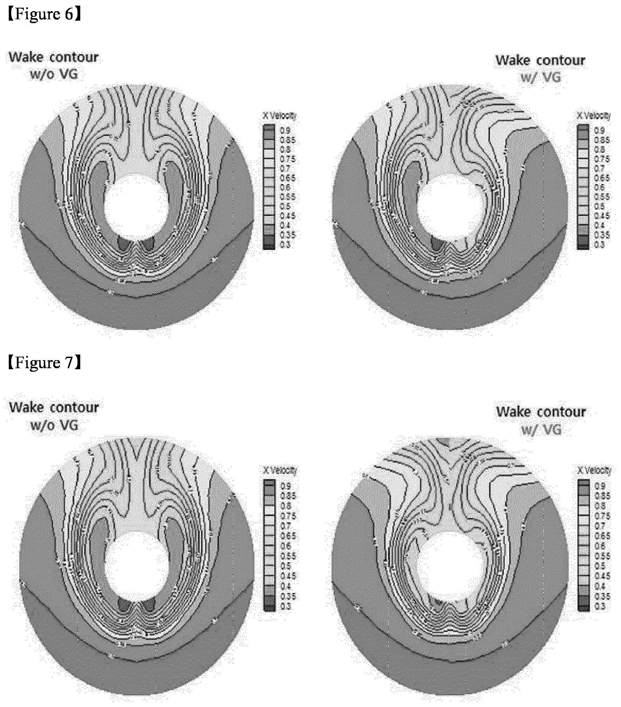

In FIGS. 6 to 12, it is assumed that the propeller rotates clockwise when seeing from the bow to the stern of a vessel.

Referring to FIGS. 6 to 8, the right ones (w/VG) show a wake contour and streamlines in a plan seeing a propeller from the stern of a vessel when a vortex generator according to an embodiment of the present invention is attached to the left and right sides of the vessel, in which the closer to the red color, the higher the flow speed, while the closer to the blue color, the lower the flow speed.

Referring FIG. 6 first, the left one (w/o VG) is a case when a vortex generator is not attached and the right one (w/VG) shows a case when the vortex generator according to the first embodiment of the present invention is attached.

That is, as shown in FIG. 6, it can be seen that the flow speed was increased in the first quadrant when the vortex generator is attached in accordance with the first embodiment of the present invention as compared with the case when the vortex generator is not attached. Nest, referring FIG. 7, the left one (w/o VG) is a case when a vortex generator is not attached and the right one (w/VG) shows a case when the vortex generator according to the second embodiment of the present invention is asymmetrically attached at different angles on the left and right sides of a vessel.

The result shown in FIG. 7 corresponds to a case when the left vortex generator was inclined at about 8 degrees and the right vortex generator was inclined at about 10 degrees, but it should be noted that the present invention is not limited thereto.

That is, as shown in FIG. 7, it can be seen that the entire flow speed was increased when vortex generators are attached in accordance with the second embodiment of the present invention, as compared with a case when the vortex generators are not attached, and that the flow speed at the right upper portion corresponding to the first quadrant was further increased as compared with other portions by further increasing the angle of the right vortex generator.

Nest, referring FIG. 8, the left one (w/o VG) is a case when a vortex generator is not attached and the right one (w/VG) shows a case when vortex generator are asymmetrically attached at different angles on the left and right sides of a vessel and an additional vortex generator is attached to the right side in accordance with the third embodiment of the present invention. The result shown in FIG. 8 shows a case when the left vortex generator was inclined at 8 degrees and the right vortex generator was inclined at 10 degrees, and the additional vortex generator was moved and attached at a distance corresponding to 2.5% of the vessel length LBP toward the propeller at the same height only on the right side, but it should be noted that the present invention is not limited thereto.

That is, as shown in FIG. 8, it can be seen that the entire flow speed was increased when vortex generators are attached in accordance with the third embodiment of the present invention, as compared with a case when they are not attached, and it can also be seen that the flow speed at the right upper portion corresponding to the first quadrant was further increased, as compared with the case shown in FIG. 7, by attaching an additional vortex generator to the right side.

Further, referring to FIG. 9, the left one shows a case when a vortex generator is formed and attached in a rectangular shape in accordance with the first embodiment of the present invention (w/VG (rectangle)), while the right one shows a case when the vortex generator according to the first embodiment of the present invention was formed and attached in a pentagonal shape (w/VG (pentagon)).

That is, as shown in FIG. 9, it can be seen that the flow speed was faster in the rectangular case than in the pentagonal case, which is because the pentagonal vortex generator generates stronger vortex ahead of the vortex generator, as compared with the rectangular vortex generator, so an entirely stronger vortex is generated and accordingly a faster flow speed is induced.

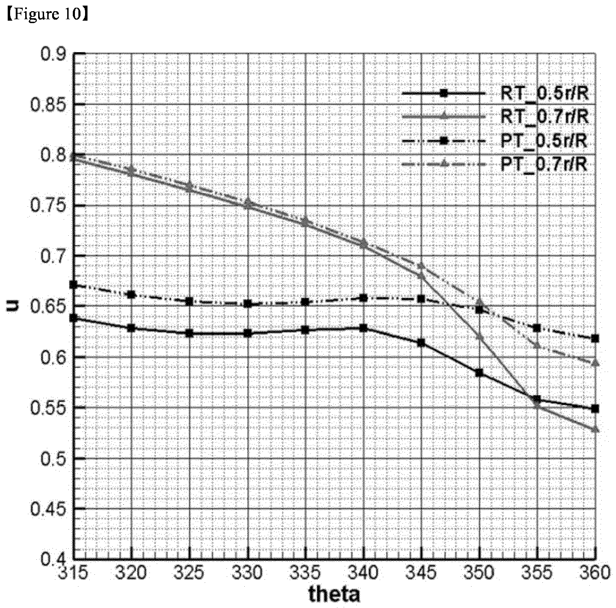

Further, referring to FIG. 10, shown is flow speed distribution in the axial direction of a propeller when there is no vortex generator and flow speed distribution radially at 0.5r/R and 0.7r/R in a propeller surface within a rotational angle of 315 ∼ 360 where particularly a low flow passes in the first quadrants of the rectangular vortex generator and the pentagonal vortex generator in FIG. 9.

In FIG. 10, the reference point of the rotational angle is the top point (12 o'clock direction) as 0 degree and the counterclockwise direction is the positive direction, in which the first quadrant is the range of 270 to 360 degrees.

Further, in FIG. 10, Bare means a case without a vortex generator, R is a propeller radius, RT is a rectangular vortex generator, and PT a pentagonal vortex generator.

As shown in FIG. 10, it can be seen that when both of the rectangular vortex generator and the pentagonal vortex generator increases the flow speed, as compared with a case without a vortex generator and cavitation on propeller surfaces is reduced.

A flow passes very fast the pentagonal vortex generator in 315 to 360 degrees where a flow speed is low, as compared with the rectangular vortex generator, and particularly, the flow speed was increased by about 12% or more around 350 ∼ 360 degrees where the flow speed is the lowest.

That is, this result means that both of the rectangular vortex plate and the pentagonal vortex plate increases the flow speed, as compared with a case without a vortex generator, so cavitation on the propeller surfaces is reduced, but the pentagonal vortex generator further reduces cavitation in the area with a low flow speed, as compared with the rectangular vortex generator, whereby it is possible to effectively reduce noise and vibration.

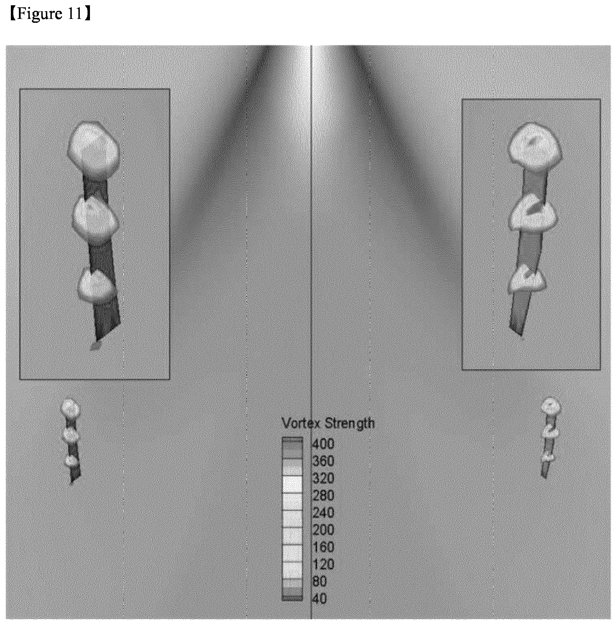

Further, referring to FIG. 11, the left one and the right one show vortex strength generated by a vortex plate when a vortex generator is formed and attached in a rectangular shape in accordance with the first embodiment of the present invention and when the vortex generator according to the first embodiment of the present invention was formed and attached in a pentagonal shape, respectively.

As shown in FIG. 11, it can be seen that the pentagonal vortex plate increases the vortex strength maximally by 20% or more in comparison to the rectangular vortex plate, so it is very effective in control of a flow speed using vortex in comparison to the rectangular vortex plate. On the basis of this result, it can be seen that a pentagon is more effective than a rectangle as the shape of the vortex generator.

Although the vortex generator is formed in a pentagonal shape in the embodiments of the present invention for simple description, a plate is added on the pentagonal vortex plate when the pentagonal plate is substantially welded to a vessel by welding for structural stability, and the contact portion between the vortex plate and the hull and the angled portions of the vortex plate are chamfered and filleted so that acute right-angled portions are rounded. Further, referring to FIG. 12, FIG. 12A and FIG. 12B are diagrams showing cavitation distribution on propeller surfaces when a vortex generator is not attached and when the vortex generator according to the second embodiment of the present invention is attached, respectively.

That is, as shown in FIG. 12, it can be seen that the volume of cavitation on the propeller surfaces was greatly reduced when a vortex generator is attached, which means that it is possible to considerably reduce propeller noise and vibration due to cavitation.

Accordingly, it is possible to achieve a vortex generator that generates an asymmetric wake for reducing propeller noise and vibration according to the present invention through the configuration described above.

Further, since the vortex generator that generates an asymmetric wake for reducing propeller noise and according to the present invention is achieved through the configuration described above, it is possible to solve the problems with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and flow direction by the force of fluid, and in that it can improve propeller efficiency from the pre-swirl effect by controlling the flow moving to a propeller by changing the tangential speed, but causes a side effect of an increase in propeller noise and vibration due to an increase of cavitation, by providing a vortex generator that generates an asymmetric wake for reducing propeller noise and vibration to minimize cavitation noise by generating asymmetric wake distribution for increasing the speed of a flow in the first quadrant of a propeller (the second quadrant when the propeller rotates counterclockwise) where cavitation is generated most when the propeller rotates clockwise when seeing the bow from the stern by reducing an angle of attack of a blade surface by changing an axial speed using an asymmetric wake.

Further, according to the present invention, there is provided a vortex generator that generates an asymmetric wake for reducing propeller noise and vibration to minimize cavitation noise by generating asymmetric wake distribution for increasing the speed of a flow in the first quadrant of a propeller (the second quadrant when the propeller rotates counterclockwise) where cavitation is generated most when the propeller rotates clockwise when seeing the bow from the stern by reducing an angle of attack of a blade surface by changing an axial speed using an asymmetric wake, so that the angles of attack between a flow and the blade surfaces of a propeller is equalized by a vortex generator asymmetrically attached to the left and right sides of a hull and flow rectification performance is improved by making a wake flowing to propeller surfaces uniform, whereby it is possible to reduce noise and vibration due to cavitation.

Although vortex generators that generate an asymmetric wake for reducing noise and vibration of a propeller according to embodiments of the present invention were described above, the present invention is not limited to the embodiments and may be changed, modified, combined, and replaced in various ways, depending on necessities in design and other various factors by those skilled in the art.

### <Description of the Reference Numerals in the Drawings>

10: Vortex generator
20: Vortex generator

## Claims

1. A vortex generator (10, 20) that generates an asymmetric wake for reducing propeller noise and vibration in order to solve the problems with a blade-shaped appendage or a flow control fin of the related art having a defect in that it should be large to achieve an effect because the blade-shaped structure is attached to the hull at the front portion of a propeller and has a predetermined angle of attack with respect to a flow to control a flow moving to the propeller, thereby controlling the flow speed and direction by the force of fluid, and in that it can improve propeller efficiency from the pre-swirl effect by controlling the flow moving to a propeller by changing the tangential speed, but causes a side effect of an increase in propeller noise and vibration due to an increase of cavitation,
the vortex generator (10, 20) comprising:
- a first vortex generating plate (10) formed in a metal plate shape and attached to a starboard side of a vessel (a port side when a propeller rotates counterclockwise) ahead of the propeller, when the propeller rotates clockwise,
wherein an angle of attack of a flow moving to blades of the propeller is reduced by generating an asymmetric wake further increasing a speed of a flow moving to blade surfaces of the propeller at a starboard upper portion of the propeller that corresponds to a portion where the cavitation is generated most (at a port side upper portion when the propeller rotates counterclockwise), thereby reducing the cavitation at the starboard side upper portion of the propeller (at the port side upper portion when the propeller rotates counterclockwise) where the cavitation is generated most to reduce propeller noise and vibration,
**characterized in that,**
the vortex generating plate is formed in a pentagonal shape.

2. The vortex generator (10, 20) according to claim 1, further comprising:
- a second vortex generating plate formed in a metal pentagonal plate shape the same as the first vortex generating plate (10) and attached to the port side of the vessel ahead of the propeller (the starboard side when the propeller rotates counterclockwise), opposite to the first vortex generating plate (10),
wherein the first vortex generating plate (10) and the second vortex generating plate are attached at the same position at different angles on the port and starboard sides of the vessel, whereby an angle of attack of a flow moving to blades of the propeller is reduced by generating an asymmetric wake further increasing a speed of a flow moving to blade surfaces of the propeller at a starboard side upper portion of the propeller that corresponds to a portion where cavitation is generated most (at a port side upper portion when the propeller rotates counterclockwise), thereby reducing the cavitation at the starboard side upper portion of the propeller where the cavitation is generated most to reduce propeller noise and vibration.

3. The vortex generator (10, 20) according to any of the preceding claims, wherein when assuming that a distance (AP∼FP) between a bow (FP) to a stern (AP) of the vessel is an entire length (LBP) of the vessel, the first vortex generating plate (10) and the second vortex generating plate are attached at positions corresponding to 12 ∼ 18% of the entire length (LBP) from the stern (AP).

4. The vortex generator (10, 20) according to any of the preceding claims, further comprising a third vortex generating plate (20) attached to the starboard side of the vessel (the port side when the propeller rotates counterclockwise) at the same height as the first vortex generating plate (10), closer to the propeller than the first vortex generating plate (10),
wherein the angle of attack of the flow moving toward the blades of the propeller is further reduced by further increasing the flow speed of the flow moving to the blade surfaces of the propeller at the starboard side upper portion of the propeller (port side upper portion when the propeller rotates counterclockwise), thereby further reducing the cavitation.

5. The vortex generator (10, 20) according to claim 4, wherein the third vortex generating plate (20) is attached at a position corresponding to 8 ∼ 15% of the entire length (LBP) from the stern (AP).

6. The vortex generator (10, 20) according to any of the preceding claims 4 - 5, wherein the first vortex generating plate (10) to the third vortex generating plate (20) are disposed within a range from a bottom of the vessel to an axis of the propeller.

7. The vortex generator (10, 20) according to any of the preceding claims 4 - 6, wherein the first vortex generating plate to the third vortex generating plate are formed in the pentagonal shape.

8. The vortex generator (10, 20) according to any of the preceding claims 4 - 7,, wherein the first vortex generating plate (10) to the third vortex generating plate (20) are positioned at an angle such that an angle of attack between the vortex generating plates (10, 20) and a flow moving to the vortex generating plate (10, 20) is 5 ∼ 15 degrees.

9. The vortex generator (10, 20) according to any of the preceding claims 4 - 8,, wherein a difference of attachment angle between the first (10) and third (20) vortex generating plates disposed on the starboard side of the vessel when the propeller rotates clockwise (the port side when the propeller rotates counterclockwise) and the second vortex generating plate disposed on the port side of the vessel (the starboard side when the propeller rotates counterclockwise) is 0 ∼ 10 degrees.

10. The vortex generator (10, 20) according to any of the preceding claims 4 - 8,, wherein the difference of attachment angle between the first (10) and third (20) vortex generating plates disposed on the starboard side of the vessel when the propeller rotates clockwise (the port side when the propeller rotates counterclockwise) and the second vortex generating plate disposed on the port side of the vessel (the starboard side when the propeller rotates counterclockwise) is 1 ∼ 10 degrees.

11. The vortex generator (10, 20) according to any of the preceding claims 4 - 9,, wherein the difference of attachment angle between the first (10) and third (20) vortex generating plates disposed on the starboard side of the vessel when the propeller rotates clockwise (the port side when the propeller rotates counterclockwise) and the second vortex generating plate disposed on the port side of the vessel (the starboard side when the propeller rotates counterclockwise) is 1 ∼ 5 degrees.

12. A method of reducing noise and vibration of a propeller by reducing cavitation using the vortex generator (10, 20) that generates an asymmetric wake for reducing noise and vibration of a propeller of any one of claims 1 to 11.

13. A vessel that reduces noise and vibration by reducing cavitation using the vortex generator (10, 20) that generates an asymmetric wake for reducing noise and vibration of a propeller of any one of claims 1 to 11 and is attached to the vessel.

## Patentansprüche

1. Wirbelgenerator (10, 20), der eine asymmetrische Nachlaufströmung zum Reduzieren von Propellergeräuschen und Vibrationen erzeugt, um die Probleme mit einem schaufelförmigen Anhängsel oder einer Strömungskontrollflosse des zugehörigen Stands der Technik zu lösen, der einen Mangel aufweist, indem er groß sein sollte, um eine Wirkung zu erzielen, weil die schaufelförmige Struktur an dem Rumpf an dem vorderen Abschnitt eines Propellers befestigt ist und einen vorbestimmten Anstellwinkel in Bezug auf eine Strömung aufweist, um eine sich zum Propeller bewegende Strömung zu steuern, wodurch die Strömungsgeschwindigkeit und -richtung durch die Kraft des Fluids gesteuert wird, und dadurch, dass es die Propellereffizienz aus dem Vorwirbelungseffekt verbessern kann, indem es die Strömung steuert, die sich zu einem Propeller bewegt, indem es die Tangentialgeschwindigkeit ändert, aber eine Nebenwirkung in Form einer Erhöhung des Propellergeräusches und der Vibration aufgrund einer Erhöhung der Kavitation verursacht,
wobei der Wirbelgenerator (10, 20) umfasst:
- eine erste Wirbel erzeugende Platte (10), die in einer Metallplattenform ausgebildet und an einer Steuerbordseite eines Wasserfahrzeugs (an einer Backbordseite, wenn sich ein Propeller gegen den Uhrzeigersinn dreht) vor dem Propeller befestigt ist, wenn sich der Propeller im Uhrzeigersinn dreht,
wobei ein Anstellwinkel einer Strömung, die sich zu den Schaufeln des Propellers bewegt, reduziert wird, indem eine asymmetrische Nachlaufströmung erzeugt wird, die die Geschwindigkeit einer Strömung, die sich zu den Schaufeloberflächen des Propellers an einem steuerbordseitigen oberen Abschnitt des Propellers bewegt, weiter erhöht, der einem Abschnitt entspricht, in dem die Kavitation am stärksten erzeugt wird (an einem backbordseitigen oberen Abschnitt, wenn sich der Propeller gegen den Uhrzeigersinn dreht), wodurch die Kavitation am steuerbordseitigen oberen Abschnitt des Propellers verringert wird (an dem backbordseitigen oberen Abschnitt, wenn sich der Propeller gegen den Uhrzeigersinn dreht) wo die Kavitation am stärksten erzeugt wird, um das Geräusch und die Vibration des Propellers zu reduzieren, **dadurch gekennzeichnet, dass**
die Wirbel erzeugende Platte ist in einer fünfeckigen Form ausgebildet.

2. Wirbelgenerator (10, 20) nach Anspruch 1, ferner umfassend:
- eine zweite Wirbel erzeugende Platte, die in einer fünfeckigen Metallplattenform ausgebildet ist, die der Form der ersten Wirbel erzeugenden Platte (10) entspricht und an der Backbordseite des Wasserfahrzeuges vor dem Propeller gegenüber der ersten Wirbel erzeugenden Platte (10) befestigt ist (an der Steuerbordseite, wenn sich der Propeller gegen den Uhrzeigersinn dreht), wobei die erste Wirbel erzeugende Platte (10) und die zweite Wirbel erzeugende Platte an derselben Position in verschiedenen Winkeln an der Backbordseite und der Steuerbordseite des Wasserfahrzeuges befestigt sind, wobei ein Anstellwinkel einer Strömung, die sich zu den Schaufeln des Propellers bewegt, reduziert wird, indem eine asymmetrische Nachlaufströmung erzeugt wird, die die Geschwindigkeit einer Strömung, die sich zu den Schaufeloberflächen des Propellers an einem steuerbordseitigen oberen Abschnitt des Propellers bewegt, weiter erhöht, der einem Abschnitt entspricht, in dem die Kavitation am stärksten erzeugt wird (an einem backbordseitigen oberen Abschnitt, wenn sich der Propeller gegen den Uhrzeigersinn dreht), wodurch die Kavitation an dem steuerbordseitigen oberen Abschnitt des Propellers in dem die Kavitation am stärksten erzeugt wird reduziert wird um das Geräusch und die Vibration des Propellers zu reduzieren.

3. Wirbelgenerator (10, 20) nach einem der vorhergehenden Ansprüche, wobei unter der Annahme, dass ein Abstand (AP ∼ FP) zwischen einem Bug (FP) und einem Heck (AP) des Wasserfahrzeugs eine Gesamtlänge (LBP) des Wasserfahrzeuges ist, wobei die erste Wirbel erzeugende Platte (10) und die zweite Wirbel erzeugende Platte an Positionen angebracht sind die 12 ∼ 18 % der Gesamtlänge (LBP) von dem Heck (AP) entsprechen.

4. Wirbelgenerator (10, 20) nach einem der vorhergehenden Ansprüche, ferner umfassend eine dritte Wirbel erzeugende Platte (20), die an der Steuerbordseite des Wasserfahrzeuges (an der Backbordseite, wenn sich der Propeller gegen den Uhrzeigersinn dreht) in der gleichen Höhe wie die erste Wirbel erzeugende Platte (10), näher am Propeller als die erste Wirbel erzeugende Platte (10) befestigt ist, wobei der Anstellwinkel der Strömung die sich zu den Schaufeln des Propellers hin bewegt weiter reduziert wird indem die Strömungsgeschwindigkeit der Strömung die sich zu den Schaufeloberflächen des Propellers am steuerbordseitigen oberen Abschnitt des Propellers bewegt weiter erhöht wird (backbordseitiger oberer Abschnitt, wenn sich der Propeller gegen den Uhrzeigersinn dreht), wodurch die Kavitation weiter reduziert wird.

5. Wirbelgenerator (10, 20) nach Anspruch 4, wobei die dritte Wirbel erzeugende Platte (20) an einer Position befestigt ist die 8 ∼ 15 % der gesamten Länge (LBP) von dem Heck (AP) entspricht.

6. Wirbelgenerator (10, 20) nach einem der vorhergehenden Ansprüche 4 bis 5, wobei die erste Wirbel erzeugende Platte (10) zur dritten Wirbel erzeugende Platte (20) in einem Bereich von einem Boden des Wasserfahrzeuges bis zu einer Achse des Propellers angeordnet ist.

7. Wirbelgenerator (10, 20) nach einem der vorhergehenden Ansprüche 4 bis 6, wobei die erste Wirbel erzeugende Platte zur dritten Wirbel erzeugende Platte in der fünfeckigen Form ausgebildet ist.

8. Wirbelgenerator (10, 20) nach einem der vorhergehenden Ansprüche 4 bis 7, wobei die erste Wirbel erzeugende Platte (10) zur dritten Wirbel erzeugende Platte (20) in einem Winkel positioniert ist derart dass ein Anstellwinkel zwischen den Wirbel erzeugenden Platten (10, 20) und einer sich zu der Wirbel erzeugenden Platte (10, 20) bewegenden Strömung 5 ∼ 15 Grad beträgt.

9. Wirbelgenerator (10, 20) nach einem der vorhergehenden Ansprüche 4 bis 8, wobei eine Differenz eines Befestigungswinkels zwischen den ersten (10) und dritten (20) Wirbel erzeugenden Platte die an der Steuerbordseite des Wasserfahrzeuges angeordnet sind wenn sich der Propeller im Uhrzeigersinn dreht (an der Backbordseite, wenn sich der Propeller gegen den Uhrzeigersinn dreht) und der zweiten Wirbel erzeugenden Platte, die auf der Backbordseite des Wasserfahrzeuges angeordnet ist (an der Steuerbordseite, wenn sich der Propeller gegen den Uhrzeigersinn dreht), 0 ∼ 10 Grad beträgt.

10. Wirbelgenerator (10, 20) nach einem der vorhergehenden Ansprüche 4 bis 8, wobei die Differenz eines Befestigungswinkels zwischen den ersten (10) und dritten (20) Wirbel erzeugenden Platte die auf der Steuerbordseite des Wasserfahrzeuges angeordnet sind wenn sich der Propeller im Uhrzeigersinn dreht (an der Backbordseite, wenn sich der Propeller gegen den Uhrzeigersinn dreht) und der zweiten Wirbel erzeugenden Platte die auf der Backbordseite des Wasserfahrzeuges angeordnet ist (an der Steuerbordseite, wenn sich der Propeller gegen den Uhrzeigersinn dreht) 1 ∼ 10 Grad beträgt.

11. Wirbelgenerator (10, 20) nach einem der vorhergehenden Ansprüche 4 bis 9, wobei die Differenz eines Befestigungswinkels zwischen den ersten (10) und dritten (20) Wirbel erzeugenden Platten die auf der Steuerbordseite des Wasserfahrzeuges angeordnet sind wenn sich der Propeller im Uhrzeigersinn dreht (an der Backbordseite, wenn sich der Propeller gegen den Uhrzeigersinn dreht) und der zweiten Wirbel erzeugenden Platte, die auf der Backbordseite des Wasserfahrzeuges angeordnet ist (an der Steuerbordseite, wenn sich der Propeller gegen den Uhrzeigersinn dreht) 1 ∼ 5 Grad beträgt.

12. Verfahren zum Reduzieren von Geräusch und Vibration eines Propellers durch Reduzieren von Kavitation unter Verwendung des Wirbelgenerators (10, 20), der eine asymmetrische Nachlaufströmung erzeugt, um Geräusch und Vibration eines Propellers nach einem der Ansprüche 1 bis 11 zu reduzieren.

13. Wasserfahrzeug, das Geräusch und Vibration durch Reduzierung von Kavitation reduziert unter Verwendung des Wirbelgenerators (10, 20) der eine asymmetrische Nachlaufströmung zur Reduzierung von Geräusch und Vibration eines Propellers nach einem der Ansprüche 1 bis 11 erzeugt und an dem Wasserfahrzeug befestigt ist.

## Revendications

1. Générateur de tourbillon (10, 20) qui génère une onde asymétrique pour réduire le bruit et la vibration de l'hélice afin de résoudre les problèmes avec un appendice en forme de pale ou une ailette de commande de flux de l'art connexe ayant un défaut en ce qu'ils doivent être grands pour obtenir un effet parce que la structure en forme de pale est fixée à la coque au niveau de la partie avant d'une hélice et a un angle d'attaque prédéterminé par rapport à un flux pour commander un flux se déplaçant vers l'hélice, de façon à réguler la vitesse et la direction de flux par la force de fluide, et en ce qu'il peut améliorer l'efficacité de l'hélice à partir de l'effet prétourbillon par commande du flux se déplaçant vers une hélice en modifiant la vitesse tangentielle, mais cause un effet secondaire d'une augmentation du bruit et de la vibration de l'hélice en raison d'une augmentation de cavitation,
le générateur de tourbillon (10, 20) comprenant :
- une première plaque de génération de tourbillon (10) formée dans une forme de plaque métallique et fixée à un côté tribord d'un navire (un côté bâbord lorsqu'une hélice tourne dans le sens antihoraire) devant l'hélice, lorsque l'hélice tourne dans le sens horaire, dans lequel un angle d'attaque d'un flux se déplaçant vers les pales de l'hélice est réduit par génération d'une onde asymétrique augmentant plus avant une vitesse d'un flux se déplaçant vers les surfaces de pale de l'hélice au niveau d'une partie supérieure tribord de l'hélice qui correspond à une partie où la cavitation est générée le plus (au niveau d'une partie supérieure côté bâbord lorsque l'hélice tourne dans le sens antihoraire), de façon à réduire la cavitation au niveau de la partie supérieure côté tribord de l'hélice (au niveau de la partie supérieure côté bâbord lorsque l'hélice tourne dans le sens antihoraire) où la cavitation est générée le plus pour réduire le bruit et la vibration de l'hélice,
**caractérisé en ce que,**
la plaque de génération de tourbillon est formée sous une forme pentagonale.

2. Générateur de tourbillon (10, 20) selon la revendication 1, comprenant en outre :
- une deuxième plaque de génération de tourbillon formée sous une forme de plaque pentagonale métallique identique à la première plaque de génération de tourbillon (10) et fixée au côté bâbord du navire devant l'hélice (le côté tribord lorsque l'hélice tourne dans le sens antihoraire), opposé à la première plaque de génération de tourbillon (10),
dans lequel la première plaque de génération de tourbillon (10) et la deuxième plaque de génération de tourbillon sont fixées à la même position à différents angles sur les côtés bâbord et tribord du navire, de sorte qu'un angle d'attaque d'un flux se déplaçant vers les pales de l'hélice soit réduit par génération d'une onde asymétrique augmentant plus avant une vitesse d'un flux se déplaçant vers les surfaces de pale de l'hélice au niveau d'une partie supérieure côté tribord de l'hélice qui correspond à une partie où la cavitation est générée le plus (au niveau d'une partie supérieure côté bâbord lorsque l'hélice tourne dans le sens antihoraire), de façon à réduire la cavitation au niveau de la partie supérieure côté tribord de l'hélice où la cavitation est générée le plus pour réduire le bruit et la vibration de l'hélice.

3. Générateur de tourbillon (10, 20) selon l'une quelconque des revendications précédentes, dans lequel, lorsqu'il est supposé qu'une distance (AP-FP) entre une proue (FP) et une poupe (AP) du navire est une longueur entière (LBP) du navire, la première plaque de génération de tourbillon (10) et la deuxième plaque de génération de tourbillon sont fixées aux positions correspondant à 12 à 18 % de la longueur entière (LBP) depuis la poupe (AP).

4. Générateur de tourbillon (10, 20) selon l'une quelconque des revendications précédentes, comprenant en outre une troisième plaque de génération de tourbillon (20) fixée au côté tribord du navire (le côté bâbord lorsque l'hélice tourne dans le sens antihoraire) à la même hauteur que la première plaque de génération de tourbillon (10), plus proche de l'hélice que la première plaque de génération de tourbillon (10),
dans lequel l'angle d'attaque du flux se déplaçant vers les pales de l'hélice est réduit plus avant en augmentant la vitesse d'écoulement du flux se déplaçant vers les surfaces de pale de l'hélice au niveau de la partie supérieure côté tribord de l'hélice (partie supérieure côté bâbord lorsque l'hélice tourne dans le sens antihoraire), de façon à réduire plus avant la cavitation.

5. Générateur de tourbillon (10, 20) selon la revendication 4, dans lequel la troisième plaque de génération de tourbillon (20) est fixée à une position correspondant à 8 à 15 % de la longueur entière (LBP) à partir de la poupe (AP).

6. Générateur de tourbillon (10, 20) selon l'une quelconque des revendications précédentes 4 à 5, dans lequel la première plaque de génération de tourbillon (10) à la troisième plaque de génération de tourbillon (20) sont disposées dans une plage d'un fond du navire à un axe de l'hélice.

7. Générateur de tourbillon (10, 20) selon l'une quelconque des revendications précédentes 4 à 6, dans lequel la première plaque de génération de tourbillon à la troisième plaque de génération de tourbillon sont formées dans une forme pentagonale.

8. Générateur de tourbillon (10, 20) selon l'une quelconque des revendications précédentes 4 à 7, dans lequel la première plaque de génération de tourbillon (10) à la troisième plaque de génération de tourbillon (20) sont positionnées à un angle tel qu'un angle d'attaque entre les plaques de génération de tourbillon (10, 20) et un flux se déplaçant vers la plaque de génération de tourbillon (10, 20) soit de 5 à 15 degrés.

9. Générateur de tourbillon (10, 20) selon l'une quelconque des revendications précédentes 4 à 8, dans lequel une différence d'angle de fixation entre les première (10) et troisième (20) plaques de génération de tourbillon disposées sur le côté tribord du navire lorsque l'hélice tourne dans le sens horaire (le côté bâbord lorsque l'hélice tourne dans le sens antihoraire) et la deuxième plaque de génération de tourbillon disposée sur le côté bâbord du navire (le côté tribord lorsque l'hélice tourne dans le sens antihoraire) est de 0 à 10 degrés.

10. Générateur de tourbillon (10, 20) selon l'une quelconque des revendications précédentes 4 à 8, dans lequel la différence d'angle de fixation entre les première (10) et troisième (20) plaques de génération de tourbillon disposées sur le côté tribord du navire lorsque l'hélice tourne dans le sens horaire (le côté bâbord lorsque l'hélice tourne dans le sens antihoraire) et la deuxième plaque de génération de tourbillon disposée sur le côté bâbord du navire (le côté tribord lorsque l'hélice tourne dans le sens antihoraire) est de 1 à 10 degrés.

11. Générateur de tourbillon (10, 20) selon l'une quelconque des revendications précédentes 4 à 9, dans lequel la différence d'angle de fixation entre les première (10) et troisième (20) plaques de génération de tourbillon disposées sur le côté tribord du navire lorsque l'hélice tourne dans le sens horaire (le côté bâbord lorsque l'hélice tourne dans le sens antihoraire) et la deuxième plaque de génération de tourbillon disposée sur le côté bâbord du navire (le côté tribord lorsque l'hélice tourne dans le sens antihoraire) est de 1 à 5 degrés.

12. Procédé de réduction du bruit et de la vibration d'une hélice par réduction de la cavitation en utilisant le générateur de tourbillon (10, 20) qui génère une onde asymétrique pour réduire le bruit et la vibration d'une hélice selon l'une quelconque des revendications 1 à 11.

13. Navire qui réduit le bruit et la vibration par réduction de la cavitation en utilisant le générateur de tourbillon (10, 20) qui génère une onde asymétrique pour réduire le bruit et la vibration d'une hélice selon l'une quelconque des revendications 1 à 11 et est fixé au navire.
